# EUROPEAN PATENT SPECIFICATION

(11) **EP 4 254 398 B1**
(45) Date of publication and mention of the grant of the patent: **19.02.2025**
(21) Application number: 22188436.4
(22) Date of filing: 03.08.2022
(51) Int. Cl.: G10H 1/32, G10H 3/14

(54) **ELECTRONIC CYMBAL AND STRIKING DETECTION METHOD**
ELEKTRONISCHES ZIMBEL- UND SCHLAGDETEKTIONSVERFAHREN
CYMBALE ÉLECTRONIQUE ET PROCÉDÉ DE DÉTECTION DE FRAPPE

(30) Priority: 29.03.2022 JP 2022054432
(43) Date of publication of application: 04.10.2023
(73) Proprietor: Roland Corporation, Shizuoka 431-1304 (JP)
(72) Inventor: Khalid, Suhada Binti, 50480 Kuala Lumpur (MY); Rani, Nuradiza Binti, 50480 Kuala Lumpur (MY); Kobayashi, Syota, Hamamatsu, Shizuoka, 431-1304 (JP)
(74) Representative: Becker, Eberhard

(56) References cited:
- WO-A1-2019/176127
- CN-U- 202 258 288
- CN-U- 204 315 222
- JP-A- 2013 015 852
- JP-A- 2019 113 667
- US-A1- 2021 035 543
- US-A1- 2022 044 664

## Description

### BACKGROUND

### Technical Field

The invention relates to an electronic cymbal and a striking detection method, and particularly relates to an electronic cymbal and a striking detection method capable of facilitating the sensor sensitivity with respect to striking from a lateral direction.

### Description of Related Art

An electronic cymbal including a frame, an edge sensor installed to an upper surface on an outer edge side of the frame, and a cover covering an upper surface of the frame in a state in which a space is formed between the edge sensor and the cover and detecting striking to an outer edge portion of the cover (frame) by the edge sensor is known.

For example, Patent Document 1 recites an electronic cymbal including an upper cover part 5b1 covering an upper surface of a frame 4 and a lower cover part 5b2 with coverage from an outer edge (outer peripheral surface) of the frame 4 to an edge part of a lower surface. In such technique, a protrusion part 5b3 protruding toward an edge sensor 7b is formed in the upper cover part 5bl, and when the performer strikes an outer edge portion of the upper cover part 5b1 from the top by a stick, etc., due to elastic deformation (bending) of the upper cover part 5bl, the protrusion part 5b3 is pressed to the edge sensor 7b. Accordingly, the striking to the outer edge portion of the cover 5 (the frame 4) is detected by the edge sensor 7b.

WO 2019/176127 A1, US 2021/035543 A1, CN 204 315 222U and JP 2013 015852 A disclose electronic cymbals comprising edge sensors placed on a frame under a cover part having a stabilising protrusion.

US 2022/044664 A1, JP 2019 113667 A and CN 202 258 288 U disclose electronic cymbals comprising a frame placed below a cover part, the frame comprising a tilted edge sensor support portion.

### [Prior Art Document]

### [Patent Document]

[Patent Document 1] Japanese Laid-open No. 2021-026077 (e.g., para. 0040, 0041, FIG. 4)

### SUMMARY

### [Issues to be solved by the invention]

However, in the conventional technology, when the outer edge portion of the cover 5 is struck in a state in which the stick is upright (referred to striking from the lateral direction), before the protrusion part 5b3 is pressed to the edge sensor 7b, the upper cover 5b1 or the lower cover part 5b2 may contact the outer edge of the frame 4. When such contact occurs, since the pressing of the edge sensor 7b due to the protrusion part 5b3 is insufficient, an issue that the sensitivity of the edge sensor 7b with respect to the striking from the lateral direction may be low arises.

The invention has been made to solve the above issue, and an objective of the invention is to provide an electronic cymbal and a striking detection method capable of facilitating the sensor sensitivity with respect to the striking from the lateral direction.

### [Means for solving the issue]

In order to achieve the objective, an electronic cymbal is provided according to appended claim 1.

Another aspect of the invention provides a striking detection method using an electronic cymbal according to appended claim 10.

### BRIEF DESCRIPTION OF THE DRAWINGS

FIG. 1 is a cross-sectional view illustrating an electronic cymbal according to a first embodiment.
FIG. 2 is a partially enlarged cross-sectional view of the electronic cymbal in which a portion II of FIG. 1 is enlarged.
In FIG. 3, (a) is a partially enlarged cross-sectional view of the electronic cymbal illustrating a state in which an edge portion is struck by normal striking, and (b) is a partially enlarged cross-sectional view of the electronic cymbal illustrating a state in which the edge portion is struck by striking from a lateral direction.
In FIG. 4, (a) is a cross-sectional view illustrating an electronic cymbal according to an example departing from the scope of the claims, and (b) is a cross-sectional view illustrating an electronic cymbal according to a second embodiment.

### DESCRIPTION OF THE EMBODIMENTS

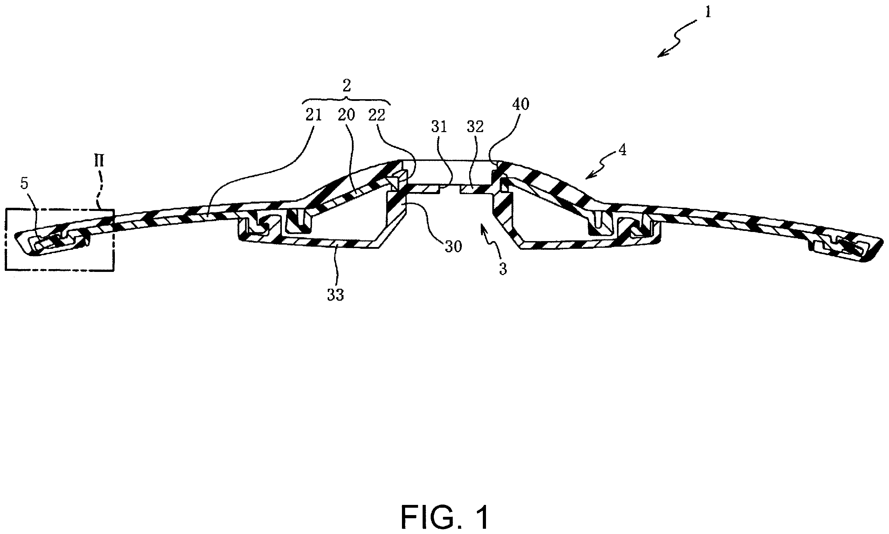

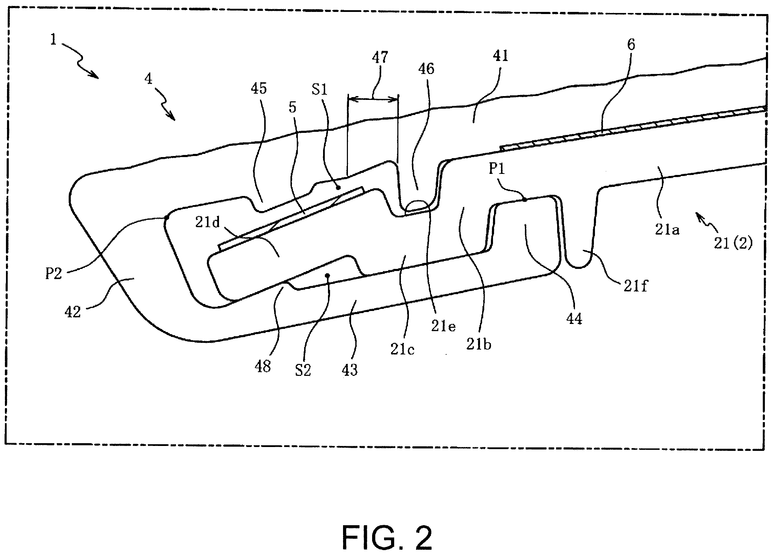

Hereinafter, several embodiments will be described with reference to the accompanying drawings. Firstly, the overall configuration of an electronic cymbal 1 is described with reference to FIG. 1. FIG. 1 is a cross-sectional view illustrating an electronic cymbal 1 according to a first embodiment. FIG. 1 illustrates an end surface cut at a plane along a central axis of a frame 2 that is disc-shaped (the same applies to FIG. 2 and subsequent drawings). In addition, in the following description, the description is made by setting the direction along the central axis of the disc-shaped frame 2 as upper-lower direction and a direction (radial direction) orthogonal to the upper-lower direction as a left-right direction.

As shown in FIG. 1, the electronic cymbal 1 is an electronic percussion instrument that simulates an acoustic cymbal (referred to as "cymbal" in the following). The skeleton of the electronic cymbal 1 is formed by the frame 2.

The frame 2 is a frame made of resin and including a bell frame 20 that simulates the shape of a bell of the cymbal and a bow frame 21 that simulates the shape of a bow of the cymbal. The bell frame 20 is formed in a bowl shape tilting downward from the central side thereof toward the outer peripheral side, and the bow frame 21 extends from the outer edge of the bell frame 20 toward the outer peripheral side (the outer side in the left-right direction).

The bow frame 21 gradually tilts downward with respect to the bell frame 20 toward the outer peripheral side, and the frame 2 as a whole is formed in a substantially disc shape by integrally forming the bell frame 20 and the bow frame 21.

A through hole 22 is formed at the center of the bell frame 20, and an inner wall part 30 of a case 3 is caught to the through hole 22. The inner wall part 30 is formed in a substantially cylindrical shape, and the inner peripheral side of the inner wall part 30 (the inner side in the left-right direction) is blocked by a disc-shaped support part 32 having a through hole 31 at the center. A rod (not shown) for supporting the electronic cymbal 1 is inserted into the through hole 31 of the support part 32.

A bottom wall part 33 extends from the lower end of the inner wall part 30 toward the outer peripheral side. By fixing the outer edge of the bottom wall part 33 to the lower surface of the frame 2 (the bow frame 21), a space surrounded by the frame 2 and the case 3 is formed on the lower surface side of the frame 2. Electronic components, such as a striking sensor (not shown), a substrate (not shown) etc., installed to the lower surface of the bell frame 20 is stored in the space. The striking sensor is a piezoelectric element detecting the vibration of the frame 2.

The upper surface of each of the bell frame 20 and the bow frame 21 is covered by a cover 4 made of rubber and having a through hole 40 at the center, and the cover 4 is formed in a shape (substantially disc shape) along each of the frames 20 and 21. A bell part sensor not shown herein is provided between the cover 4 and the bell frame 20, and the bell part sensor is a pressure sensor (e.g., a membrane switch) that is sheet-like and is ON/OFF when the cover 4 covering the bell frame 20 is struck.

The striking to the bell frame 20 is detected by the bell part sensor, and the striking to the bow frame 21 is detected by the striking sensor. In addition, as will be explicated in the following, the striking to the edge (outer edge) portion of the bow frame 21 is detected by an edge sensor 5. The striking detected by each sensor is converted into an electrical signal and output to a sound source device not shown herein. Accordingly, a musical sound in accordance with a striking position to the electronic cymbal 1 is generated.

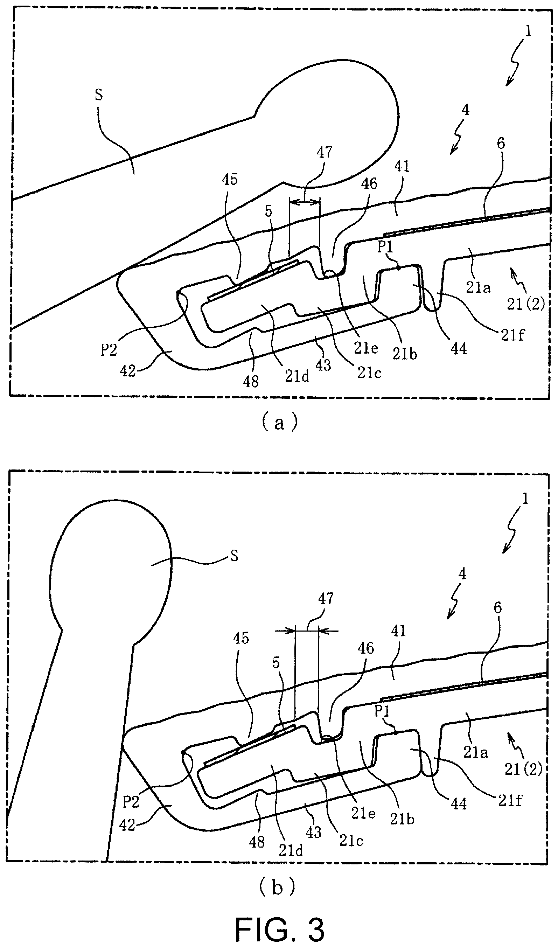

Then, referring to FIG. 2 and (a) and (b) of FIG. 3, the detailed configuration of the edge portion of the electronic cymbal 1 and the function at the time when the edge portion is struck are described.

FIG. 2 is a partially enlarged cross-sectional view of the electronic cymbal 1 in which a portion II of FIG. 1 is enlarged. In FIG. 3, (a) is a partially enlarged cross-sectional view of the electronic cymbal 1 illustrating a state in which an edge portion is struck by normal striking, and (b) is a partially enlarged cross-sectional view of the electronic cymbal 1 illustrating a state in which the edge portion is struck by striking from a lateral direction. In FIG. 2 and (a) and (b) of FIG. 3, in order to simplify the drawings, the hatching of the frame 2 (the bow frame 21) and the cover 4 is omitted.

In addition, normal striking refers to striking to the outer edge of an upper cover part 41 from the top in a state in which a stick S is slanted (at an angle close to being horizontal), and striking from the lateral direction refers to striking to the outer edge portion of the upper cover part 41 from the lateral direction in a state in which the stick S is upright (at an angle close to the vertical direction). In addition, each configuration of the electronic cymbal 1 described in the following is formed to be continuous in the peripheral direction. However, a portion of the configuration may also be intermittent in the peripheral direction.

As shown in FIG. 2, the cover 4 includes the upper cover part 41 covering the upper surface side of the bow frame 21, a lateral cover part 42 extending downward from the outer edge (the end part on the left side of FIG. 2) of the upper cover part 41, a lower cover part 43 extending from the lower end of the lateral cover part 42 toward the inner peripheral side (the right side of FIG. 2), and a bonding part 44 bent upward from the inner edge of the lower cover part 43. The parts 41 to 44 are integrally formed.

The upper cover part 41 is bonded to the upper surface of the bow frame 21 by a double-side tape 6, and the upper surface of the bonding part 44 is bonded to the lower surface of the bow frame 21 by an adhesive. Meanwhile, on the outer peripheral side with respect to these bonded portions, neither of the upper cover part 41, the lateral cover part 42, and the lower cover part 43 is bonded to the bow frame 21.

As described in the following, within the bow frame 21, a portion bonded to the upper cover part 41 (i.e., a portion covered in a state of being contacted by the upper cover part 41) is described as a covered part 21a.

A bent part 21b is bent downward from the outer edge of the covered part 21a, an overhang part 21c overhangs from the lower end of the bent part 21b toward the outer peripheral side. In addition, a sensor installation part 21d extends from the upper end on the outer edge side of the overhang part 21c to the outer peripheral side. By integrally forming the respective parts of the covered part 21a, the bent part 21b, the overhang part 21c, and the sensor installation part 21d, the edge portion of the bow frame 21 is formed.

The edge sensor 5 is bonded to the upper surface of the sensor installation part 21d, and the edge sensor 5 is also a sheet-like pressure sensor (e.g., a membrane switch) like the bell part sensor. The upper cover part 41 covers the bow frame 21 in a state in which a space S1 is formed between the upper cover part 41 and the edge sensor 5 (the sensor installation part 21d).

A protrusion 45 protruding toward the edge sensor 5 (downward) is integrally formed on the lower surface of the upper cover part 41. The protrusion 45 is a portion pressing the edge sensor 5 at the time when the outer edge portion of the upper cover part 41 is struck.

A stopper 46 integrally formed with the upper cover part 41 is provided on the inner peripheral side with respect to the protrusion 45. The stopper 46 is a protrusion protruding downward from the upper cover part 41 and inserted into a recess part 21e formed on the upper surface of the bow frame 21. The recess part 21e is a groove formed by the bent part 21b, the overhang part 21c, and the sensor installation part 21d of the bow frame 21.

In a state before the upper cover part 41 is struck (referred to as "pre-striking state" in the following), the stopper 46 and the bottom surface of the recess part 21e are in contact with each other or slightly separated (less than a gap between the protrusion 45 and the edge sensor 5).

Accordingly, as shown in (a) of FIG. 3, when the outer edge portion of the upper cover part 41 is struck from the top through normal striking, the stopper 46 contacting the bottom surface of the recess part 21e (the upper surface of the overhang part 21c) serves as the fulcrum, and the upper cover part 41 is elastically deformed to be bent downward.

As the upper cover part 41 deforms downward, the lateral cover part 42 and the lower cover part 43 deform downward so as to be separated from the bow frame 21 (the overhang part 21c and the sensor installation part 21d). This is because, as described above, the lateral cover part 42 and the lower cover part 43 are not bonded to the bow frame 21 on the outer peripheral side with respect to the bonding part 44.

Through the downward deformation of the respective cover parts 41, 42, and 43, the protrusion 45 is pressed to the edge sensor 5, and the striking to the cover 4 (the upper cover part 41) by the stick S is detected by the edge sensor 5.

Meanwhile, as shown in (b) of FIG. 3, when the upper cover part 41 is struck from the lateral direction, due to the catching between the stopper 46 and the wall surface of the recess part 21e (the outer peripheral surface of the bent part 21b), the deformation (displacement) of the upper cover part 41 toward the inner peripheral side is limited. By limiting the deformation of the upper cover part 41 toward the inner peripheral side, the contact of the upper cover part 41 and the lateral cover part 42 to the outer edge portion of the sensor installation part 21d can be suppressed. Therefore, the protrusion 45 can be easily suppressed to the edge sensor 5. Accordingly, the sensitivity of the edge sensor 5 with respect to the striking from the lateral direction can be facilitated.

In addition, in the pre-striking state (the state of FIG. 2), the stopper 46 faces the space S1, and there is no rubber filling the space S1 on the outer peripheral side of the stopper 46. Therefore, the upper cover part 41 is easily deformed to bend with the root portion of the stopper 46 as the start point. Accordingly, for example, even in the case where the outer edge portion of the upper cover part 41 is struck lightly from the lateral direction (see (b) of FIG. 3), the protrusion 45 is easily pressed to the edge sensor 5. Accordingly, the sensitivity of the edge sensor 5 with respect to the striking from the lateral direction can be facilitated.

Moreover, with the deformation of the upper cover part 41 toward the inner peripheral side being limited by the stopper 46, the force applied to the bonding portion (the double-side tape 6) between the covered part 21a and the upper cover part 41 can be reduced. Accordingly, the upper cover part 41 can be prevented from being peeled off from the covered part 21a.

In addition, a bonding position P1 between the bonding part 44 and the lower surface of the bow frame 21 is located on the inner peripheral side with respect to the stopper 46, and neither of the lateral cover part 42 and the lower cover part 43 is bonded to the bow frame 21 on the outer peripheral side with respect to the bonding position P1. Accordingly, in both (referred to as "striking from the respective directions" in the following) of the normal striking (see (a) of FIG. 3) and the striking from the lateral direction (see (b) of FIG. 3), the lateral cover part 42 and the lower cover part 43 easily follow the deformation of the upper cover part 41 with the stopper 46 as the fulcrum. That is, the deformation of the upper cover part 41 can be prevented from being obstructed by the lateral cover part 42 and the lower cover part 43. Therefore, the protrusion 45 is easily pressed to toward the edge sensor 5. Accordingly, the sensitivity of the edge sensor 5 with respect to the striking from the respective directions can be facilitated.

In addition, although the lower cover part 43 is also deformed at the time of being struck from the lateral direction, the deformation of the lower cover part 43 is limited by a protrusion part 21f. The protrusion part 21f protrudes downward from the lower surface of the bow frame 21, and the bonding part 44 is inserted between a protrusive portion formed by the bent part 21b, the overhang part 21c, and the sensor installation part 21d on the lower surface of the bow frame 21 and the protrusion part 21f.

Accordingly, since the deformation of the lower cover part 43 and the bonding part 44 toward the inner peripheral side at the time of being struck from the lateral direction (see (b) of FIG. 3) is limited by the protrusion part 21f, the upper cover part 41 and the lateral cover part 42 can be suppressed from contacting the outer edge portion of the sensor installation part 21d. Thus, since the protrusion 45 is easily pressed to the edge sensor 5, the sensitivity of the edge sensor 5 with respect to the striking from the lateral direction can be facilitated. Moreover, by limiting the deformation the lower cover part 43 and the bonding part 44 toward the inner peripheral side by the protrusion part 21f, the force applied to the bonding position P1 between the bow frame 21 and the bonding part 44 can be reduced, and the bonding part 44 can be suppressed from being peeled off from the bow frame 21.

In addition, in order to easily deform the upper cover part 41 by setting the stopper 46 as the fulcrum, a thin part 47 is formed at the upper cover part 41. More specifically, except for regions in which the protrusion 45 and the thin part 47 are formed, the thickness of the upper cover part 41 is substantially constant in regions on the outer peripheral side with respect to the stopper 46. Here, "being substantially constant" means that, compared with the averaged thickness of the upper cover part 41 in such regions, the minimum thickness and the maximum thickness of the upper cover part 41 are within ± 10% of the averaged thickness. Meanwhile, in the region in which the thin part 47 is formed, the thickness of the upper cover part 41 is thinner than other regions, and the thickness of the upper cover part 41 is gradually reduced toward the stopper 46.

By forming such thin part 47 in an adjacent portion to the outer peripheral surface of the stopper 46, at the time of being struck from the respective directions (see (a) and (b) of FIG. 3), the upper cover part 41 is easily deformed with the root portion of the stopper 46 as the start point. Accordingly, for example, even in the case where the outer edge portion of the upper cover part 41 is struck lightly, the sensitivity of the edge sensor 5 with respect to the striking from the respective directions can be facilitated.

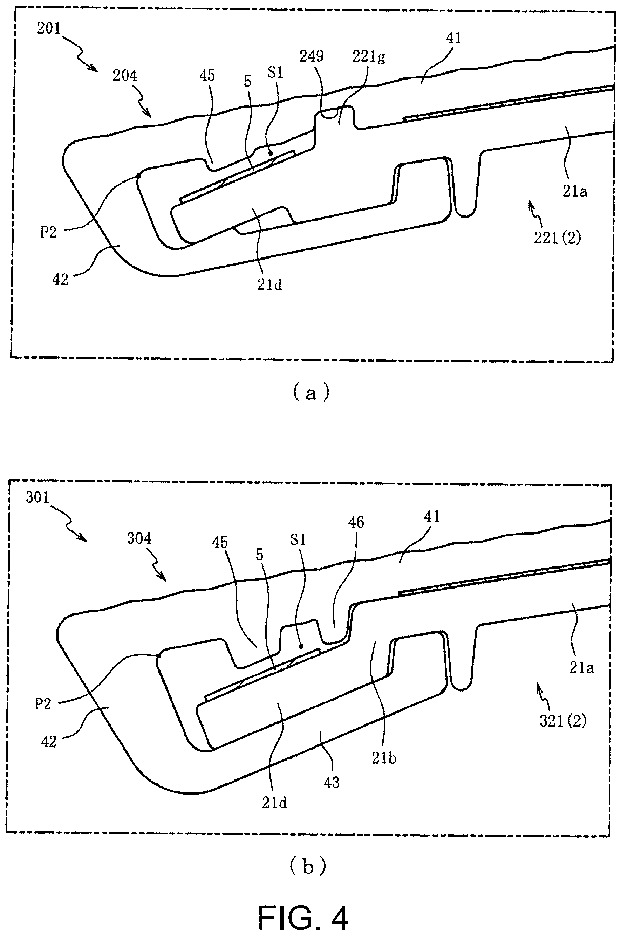

In this way, although the deformation of the upper cover part 41 toward the inner peripheral side is limited by the stopper 46 formed at the upper cover part 41 in the embodiment, the deformation of the upper cover part 41 toward the inner peripheral side can also be limited even in a configuration in which a stopper 221g protruding upward from a bow frame 221 is fit to a recess part 249 of a cover 204 in an example departing from the scope of the claims (see (a) of FIG. 4) to be described in the following, for example. However, in such configuration, since the thickness of the region of the cover 204 where the recess part 249 is formed is reduced, the cover 204 is less durable with respect to striking. When the thickness of the cover 204 is increased to ensure the durability, the overall thickness of the electronic cymbal 201 is increased, and it is difficult to keep the shape flat like the cymbal.

Comparatively, in the example, it is configured that the bent part 21b bent downward from the outer edge of the covered part 21a is formed at the bow frame 21, the stopper 46 located on the outer peripheral side of the bent part 21b is formed at the upper cover part 41, and the deformation of the upper cover part 41 toward the inner peripheral side is limited by the bent part 21b and the stopper 46. Accordingly, compared with the configuration in which the stopper 221g of the bow frame 221 is inserted into the recess part 249 of the cover 204 as in the second embodiment, the thickness of the cover 4 is ensured, and the overall thickness of the bow frame 21 and the cover 4 can be reduced. Accordingly, the electronic cymbal 1 can be in a shape similar to the cymbal.

Here, the deformation of the upper cover part 41 toward the inner peripheral side can be generally limited by the stopper 46. However, at the time of being struck strongly from the lateral direction, for example, the protrusion 45 of the upper cover part 41 is displaced toward the inner peripheral side (the inner side along the left-right direction) instead of being displaced downward. In the case where the protrusion 45 is displaced toward the inner peripheral side, the closer the angle of the upper surface of the sensor installation part 21d (the edge sensor 5) is to being horizontal, the more likely the edge sensor 5 is pressed insufficiently by the protrusion 45.

Comparatively, in the example, the upper surface of the sensor installation part 21d (the edge sensor 5) and the lower surface of the protrusion 45 are formed to be parallel, and the respective surfaces tilt downward toward the outer peripheral side at a slope greater than that of the upper surface of the covered part 21a. Accordingly, a larger angle of the upper surface of the sensor installation part 21d (the edge sensor 5) with respect to the left-right direction (horizontal direction) can be ensured. Thus, even in the case where the protrusion 45 is displaced toward the inner peripheral side due to the striking from the lateral direction, the edge sensor 5 is easily pressed by the protrusion 45. Therefore, the sensitivity of the edge sensor 5 with respect to the striking from the lateral direction can be facilitated.

In addition, the slope of the upper surface of the sensor installation part 21d is greater than that of the upper surface of the covered part 21, whereas the lower surface of the upper cover part 41 (the portion without the protrusion 45 and the thin part 47) is parallel to the upper surface of the covered part 21a. That is, the lower surface of the upper cover part 41 tilts downward toward the outer peripheral side at a slope less than that of the upper surface of the sensor installation part 21d.

Accordingly, an interval between the upper surface of the sensor installation part 21d and the lower surface of the upper cover part 41 is gradually increased from the inner peripheral side to the outer peripheral side. Therefore, a connection position P2 between the upper cover part 41 and the lateral cover part 42 can be away from the outer edge of the sensor installation part 21d. Thus, at the time of being struck from the lateral direction, the upper cover part 41 and the lateral cover part 42 can be suppressed from contacting the outer edge portion of the sensor installation part 21d. Accordingly, since the protrusion 45 is easily pressed to the edge sensor 5, the sensitivity of the edge sensor 5 with respect to the striking from the lateral direction can be facilitated.

In this way, in the example, by limiting the deformation of the upper cover part 41 toward the inner peripheral side by the stopper 46, or by increasing the slope of the upper surface of the sensor installation part 21d (the edge sensor 5), the sensitivity of the edge sensor 5 with respect to the striking from the lateral direction can be facilitated.

Comparatively, referring to a second embodiment (see (b) of FIG. 4) to be described afterwards, for example, even in a configuration in which the overhang part 21c is omitted, and the sensor installation part 21d is provided at the lower end of the bent part 21b, it is still possible to exert the function of the stopper 46. However, in the configuration in which the sensor installation part 21d with a larger slope is connected to the lower part of the bent part 21b, the sensor installation part 21d significantly protrudes downward from the bow frame 21. That is, since the thickness of the edge portion of the bow frame 21 is increased, it is difficult to keep the shape of an electronic cymbal 301 flat like the cymbal.

Comparatively, in the embodiment, it is configured that the overhang part 21c which overhangs from the lower end of the bent part 21b toward the outer peripheral side is provided, and the sensor installation part 21d is provided at the upper end part on the outer edge side of the overhang part 21c. In this way, compared with the configuration in which the overhang part 21c is omitted, the arrangement (height) of the sensor installation part 21d can be increased. Therefore, the significant downward protrusion of the sensor installation part 21d can be suppressed. Accordingly, the thickness of the edge portion of the bow frame 21 can be reduced, and the electronic cymbal 1 can be in a flat shape like the cymbal.

Here, in addition to the function of detecting the striking to the upper cover part 41, the edge sensor 5 is also provided with a function of detecting a choke playing technique in which the performer grabs the edge portion of the bow frame 21. A conventional process may be adopted for the process of distinguishing between the striking to the upper cover part 41 and the choke playing technique. Therefore, details in this regard will be omitted. As a conventional process, a process described in para. 0005 to 0008 of Japanese Laid-open No. H06-035450, etc., may serve as an example.

In such choke playing technique, as described above, the performer grabs the edge portion of the bow frame 21. In such case, when the sensor installation part 21d is provided at the upper end part on the outer edge side of the overhang part 21c, a step difference is formed in the connection portion between the overhang part 21c and the sensor installation part 21d, and a space S2 (see FIG. 2) is created between the step difference portion and the lower cover part 43. Therefore, the feeling when performing the choke playing technique deteriorates. That is, when the space S2 is formed to be large, a hard feeling like the cymbal cannot be obtained.

Comparatively, the lower cover part 43 of the embodiment includes a contact part 48 which fills a portion of the step difference formed by the overhang part 21c and the sensor installation part 21d. The contact part 48 is a protrusion integrally formed with the upper surface of the lower cover part 43, and contacts the lower surface of the sensor installation part 21d in the pre-striking state (the state shown in (a) and (b) of FIG. 2). Accordingly, when the performer grabs the vicinity of the contact part 48 to perform the choke playing technique, a relatively hard feeling can be applied, so the electronic cymbal can provide a feeling of performance close to the cymbal.

To provide the hard feeling close to the cymbal, the space S2 may be completely filled by the contact part 48. However, when the space S2 is completely filled by the contact part 48, due to a dimension error of the frame 2 or the cover 4, it is difficult to properly fit the contact part 48 to the step difference portion between the overhang part 21c and the sensor installation part 21d. In addition, when the space S2 is completely filled by the contact part 48, the deformation of the upper cover part 41 is obstructed by the catching between the overhang part 21c and the contact part 48, and it is difficult to press the protrusion 45 to the edge sensor 5.

Comparatively, in the embodiment, a gap is formed between the overhang part 21c and the contact part 48, and a portion of the space S2 is left. Accordingly, even if a dimension error occurs in the frame 2 or the cover 4, the contact part 48 can still be properly fit to the step difference portion between the overhang part 21c and the sensor installation part 21d. Therefore, the assemblability of the cover 4 can be facilitated. Moreover, since the space S2 is left, at the time of being struck from the respective directions (see (a) and (b) of FIG. 3), the contact part 48 can be suppressed from being caught by the overhang part 21c. Therefore, the upper cover part 41 is deformed easily with the stopper 48 as the fulcrum. Thus, since the protrusion 45 is easily pressed to the edge sensor 5, the sensitivity of the edge sensor 5 with respect to the striking from the respective directions can be facilitated.

In addition, as described above, although the stopper 46 is inserted into the recess part 21e, a gap is also formed between stopper 46 and the wall surface on the outer peripheral side of the recess part 21e (the sensor installation part 21d) in the pre-striking state. Accordingly, even if a dimension error occurs in the frame 2 or the cover 4, the stopper 46 can be properly inserted into the recess part 21e. Therefore, the assemblability of the cover 4 can be facilitated.

Then, the electronic cymbal 201 of the example departing from the scope of the claims is described with reference to (a) of FIG. 4. In the first embodiment, the case where the stopper 46 is formed in the cover 4 is described. However, in the example the case where the stopper 221g is formed at the bow frame 221 is described. It is noted that components same as those of the first embodiment are labelled with the same reference symbols, and the description thereof is omitted. In FIG. 4, (a) is a partially enlarged cross-sectional view of the electronic cymbal 201 according to the example. In (a) of FIG. 4, in order to simplify the drawing, the hatching of the frame 2 (the bow frame 221) and the cover 204 is omitted.

As shown in (a) of FIG. 4, the bow frame 221 of the electronic cymbal 201 of the example has the same configuration as the bow frame 21 of the first embodiment, except for the point where, in place of the recess part 21e of the first embodiment (see FIG. 2), the stopper 221g is integrally formed. Also, the cover 204 has the same configuration as the cover 4 of the first embodiment except for a point that, in place of the stopper 46 of the first embodiment (see FIG. 2), the recess part 249 is formed at the upper cover part 41.

The stopper 221g protrudes upward from the bow frame 221, and is inserted into the recess part 249 formed on the lower surface of the upper cover part 41. Accordingly, at the time of being struck from the lateral direction, through the catching between the stopper 221g and the recess part 249, the deformation of the upper cover part 41 toward the inner peripheral side can be limited. Thus, since the upper cover part 41 and the lateral cover part 42 can be suppressed from contacting the sensor installation part 21d at the time of being struck from the lateral direction, the protrusion 45 is easily pressed to the edge sensor 5.

Also, in the pre-striking state (the state of (a) of FIG. 4), the stopper 221g faces the space S1 between the sensor installation part 21d and the upper cover part 41, and there is no rubber filling the outer peripheral side of the stopper 221g. Accordingly, the upper cover part 41 is easily deformed with the stopper 221g as the fulcrum, and thus the protrusion 45 is easily pressed to the edge sensor 5 at the time of being struck from the respective directions.

Also, like the first embodiment, the upper surface of the sensor installation part 21d (the edge sensor 5) and the lower surface of the protrusion 45 are formed to be parallel, and the angles of the respective surfaces provide slopes greater than the upper surface of the covered part 21a. Accordingly, the angle of the upper surface of the sensor installation part 21d (the edge sensor 5) with respect to the horizontal direction can be increased. Thus, even if the protrusion 45 is displaced toward the inner peripheral side due to the striking from the lateral direction, the edge sensor 5 is easily pressed by the protrusion 45.

In addition, since an interval between the sensor installation part 21d and the upper cover part 41 is gradually increased toward the outer peripheral side, the connection position P2 between the upper cover part 41 and the lateral cover part 42 can be away from the outer edge of the sensor installation part 21d. Thus, since the upper cover part 41 and the lateral cover part 42 can be suppressed from contacting the sensor installation part 21d at the time of being struck from the lateral direction, the protrusion 45 is easily pressed to the edge sensor 5. Accordingly, the sensitivity of the edge sensor 5 with respect to the striking from the lateral direction can be facilitated.

Then, an electronic cymbal 301 of the second embodiment is described with reference to (b) of FIG. 4. In the first embodiment, the case where the sensor installation part 2 1d is connected to the overhang part 21c is described. However, in the second embodiment, the case where the sensor installation part 21d is connected to the lower end of the bent part 21b is described. In FIG. 4, (b) is a partially enlarged cross-sectional view of the electronic cymbal 301 according to the second embodiment. In (b) of FIG. 4, in order to simplify the drawing, the hatching of the frame 2 (a bow frame 321) and a cover 304 is omitted.

As shown in (b) of FIG.4, the bow frame 321 of the electronic cymbal 301 of the second embodiment has the same configuration as the bow frame 21 of the first embodiment, except for the point that the overhang part 21c of the first embodiment (see FIG. 2) is omitted, and the sensor installation part 21d is integrally formed at the lower end of the bent part 21b.

In addition, the cover part 304 has the same configuration as the cover 4 of the first embodiment, except for the point that the upper cover part 41 (a portion on the outer peripheral side with respect to the stopper 46) or the protrusion 45 is formed to be thicker and the point that the lower cover part 43 omitting the contact part 48 (see FIG. 2) makes contact along the lower surface of the sensor installation part 21d.

Even in the embodiment, due to the catching between the stopper 46 and the bent part 21b, the deformation of the upper cover part 41 toward the inner peripheral side can be limited at the time of being struck from the lateral direction. In this way, since the upper cover part 41 and the lateral cover part 42 can be suppressed from contacting the outer edge portion of the sensor installation part 21d at the time of being struck from the lateral direction, the protrusion 45 is easily pressed to the edge sensor 5.

In addition, in the pre-striking state (the state of (b) of FIG. 4), the stopper 46 faces the space S1 between the sensor installation part 21d and the upper cover part 41, and there is no rubber filling the outer peripheral side of the stopper 46. Accordingly, since the upper cover part 41 is easily deformed with the stopper 46 as the fulcrum, the protrusion 45 is easily pressed to the edge sensor 5 at the time of being struck from the respective directions.

Also, like the first embodiment, the upper surface of the sensor installation part 21d (the edge sensor 5) and the lower surface of the protrusion 45 are formed to be parallel, and the angles of the respective surfaces provide slopes greater than the upper surface of the covered part 21a. Accordingly, a larger angle of the upper surface of the sensor installation part 21d (the edge sensor 5) with respect to the horizontal direction can be ensured, and thus even if the protrusion 45 is displaced toward the inner peripheral side due to the striking from the lateral direction, the edge sensor 5 is easily pressed by the protrusion 45.

In addition, since an interval between the sensor installation part 21d and the upper cover part 41 is gradually increased toward the outer peripheral side, the connection position P2 between the upper cover part 41 and the lateral cover part 42 can be away from the outer edge of the sensor installation part 21d. Thus, since the upper cover part 41 and the lateral cover part 42 can be suppressed from contacting the sensor installation part 21d at the time of being struck from the lateral direction, the protrusion 45 is easily pressed to the edge sensor 5. Accordingly, the sensitivity of the edge sensor 5 with respect to the striking from the lateral direction can be facilitated.

Although the above description has been made based on the embodiments, the invention is not limited to the embodiments, and it can be easily inferred that various improvements and modifications can be made without departing from the scope of the claims.

In the respective embodiments, a configuration in which the frame 2 includes the disc-shaped bell frame 20 and the bow frame 21, 221, and 321, that is, the case in which the electronic cymbal 1, 201, 301 is an electronic percussion instrument simulating the cymbal, is described. However, the invention is not limited thereto. For example, the invention may also be applicable to an edge portion of another disc-shaped electronic percussion instrument. In addition, the outer shape of the frame 2 is not limited to being circular (disc-shaped). For example, the outer shape of the frame 2 may also be polygonal.

In the respective embodiments, the case where the lower surface of the protrusion 45 of the upper cover part 41 is parallel to the upper surface of the sensor installation part 21d (the edge sensor 5) is described. However, the invention is not limited thereto. For example, the slope of the lower surface of the protrusion 45 may also be configured as being greater or less than that of the upper surface of the sensor installation part 21d (the edge sensor 5), and the protrusion 45 may also be omitted.

In the respective embodiments, the case where the slope of the upper surface of the sensor installation part 21d (the edge sensor 5) is greater than the upper surface of the covered part 21a is described. However, in an alternative departing from the subject-matter of the appended claims, the slope of the upper surface of the sensor installation part 21d may also be configured as being the same as or less than the slope of the upper surface of the covered part 21a.

In the respective embodiments, the configuration in which the interval between the sensor installation part 21d (the edge sensor 5) and the upper cover part 41 is gradually increased is described. However, the invention is not limited thereto. For example, the interval between the sensor installation part 21d (the edge sensor 5) and the upper cover part 41 may also remain the same or be gradually decreased from the inner peripheral side to the outer peripheral side.

In the respective embodiments, the case where the bonding position P1 between the bow frame 21, 221, 321 and the bonding part 44 is located on the inner peripheral side with respect to the stopper 46, 221g is described. However, the invention is not limited thereto. For example, the bonding position P1 may also be located on the outer peripheral side with respect to the stopper 46, 221g, the bonding part 44 may be omitted, and the inner edge of the lower cover part 43 is directly bonded to the lower surface of the bow frame 21, 221, 321.

In the respective embodiments, the case where the upper cover part 41 or the bow frame 221 (the frame 2) includes the stopper 46, 221g limiting the deformation of the upper cover part 41 toward the inner peripheral side is described. However, in an alternative departing from the subject-matter of the appended claims, the stopper 46, 221g may be omitted.

In the first and second embodiments, a portion of the step difference portion (the space S2) between the overhang part 21c and the sensor installation part 21d is filled by the contact part 48. However, the invention is not limited thereto. For example, the contact part 48 may also completely fill the step difference portion (the space S2), or the contact part 48 may also be omitted.

Although omitted in the description of the first and third embodiments, the stopper 46 may contact the wall surface (the outer peripheral surface of the bent part 21b) of the recess part 21e in the pre-striking state. However, the wall surface (the outer peripheral surface of the bent part 21b) on the inner peripheral side of the recess part 21e and the stopper 46 may be separated from the stopper 46 as long as the pressing to the edge sensor 5 by the protrusion 45 does not become insufficient.

Although the first embodiment describes the case where a gap is formed between the sensor installation part 21d and the stopper 46, the invention is not limited thereto. For example, the sensor installation part 21d and the stopper 46 may also be connected with each other in the pre-striking state.

The first embodiment describes the case where the thickness of the upper cover part 41 in the thin part 47 is gradually reduced toward the stopper 46, but the invention is not limited thereto. For example, the thickness of the upper cover part 41 in the thin part 47 may also be constant. In addition, it may also be that the thin part 47 is omitted, and the thickness of the upper cover part 41 (the region where the protrusion 45 or the stopper 46 is not formed) may also remain constant. That is, if it is configured that the upper cover part 41 (the protrusion 45) can be deformed to the side of the edge sensor 5 by the stopper 46 as the fulcrum, the thickness of the upper cover part 41 can be set as appropriate.

### [Reference Signs List]

1, 201, 301: Electronic cymbal;
2: Frame;
21, 221, 321: Bow frame (a portion of the frame);
21a: Covered part;
21b: Bent part;
21c: Overhang part;
21d: Sensor installation part;
46, 221g: Stopper;
4: Cover;
41: Upper cover part;
42: Lateral cover part;
43: Lower cover part;
45: Protrusion;
47: Thin part;
48: Contact part;
5: Edge sensor (sensor).

## Claims

1. An electronic cymbal (1, 201, 301), comprising:
a plate-like frame (2);
a sensor (5) installed to an upper surface on an outer edge side of the frame (2); and
a cover (4) covering upper surfaces of the sensor (5) and the frame (2),
wherein the cover (4) comprises:
an upper cover part (41) covering the upper surface of the frame (2) in a state in which a space (S1) is formed between the upper cover part (41) and the sensor (5);
a lateral cover part (42) extending from an outer edge of the upper cover part (41) and covering an outer peripheral surface of the frame (2) in a state in which a space is formed between the lateral cover part (42) and an outer peripheral surface of the frame (2); and
a lower cover part (43) extending from a lower end of the lateral cover part (42) to an inner peripheral side and covering a lower surface of the frame (2),
wherein the frame (2) further comprises:
a covered part (21a) covered in a state of being contacted by the upper cover part (41);
a bent part (21b) bent downward from an outer edge of the covered part (21a);
an overhang part (21c) extending from a lower end of the bent part (21b) to an outer peripheral side; and
a sensor installation part (21d) which extends from an upper end part on an outer edge side of the overhang part (21c) to the outer peripheral side and to which the sensor (5) is installed,
the upper cover part (41) or the frame (2) comprises a stopper (46) facing the space (S1) between the upper cover part (41) and the sensor (5) and limits deformation of the upper cover part (41) toward the inner peripheral side,
the upper cover part (41) comprises the stopper (46) protruding toward the frame (2) on an outer peripheral side of the bent part (21b),
the deformation of the upper cover part (41) toward the inner peripheral side is limited through catching between the bent part (21b) and the stopper (46)
the upper cover part (41) comprises a protrusion (45) which protrudes toward the sensor (5) and in which a lower surface is parallel to an upper surface of the sensor installation part (21d),
**characterised in that**
the upper surface of the sensor installation part (21d) tilts downward toward the outer peripheral side at a slope greater than that of an upper surface of the covered part (21a), and
the lower cover part (43) comprises a contact part (48) contacting a lower surface of the sensor installation part (21d) in a manner of filling at least a portion of a step difference formed by the overhang part (21c) and the sensor installation part (21d).

2. The electronic cymbal (1, 201, 301) as claimed in claim 1, wherein the upper cover part (41) is bonded to the upper surface of the frame (2) on the inner peripheral side of the stopper (46).

3. The electronic cymbal (1, 201, 301) as claimed in claim 1, wherein the lower cover part (43) is bonded to a lower surface of the frame (2) on the inner peripheral side with respect to the stopper (46), and is not bonded to the lower surface of the frame (2) on an outer peripheral side with respect to a position (P1) of the bonding.

4. The electronic cymbal (1, 201, 301) as claimed in claim 1, wherein the upper cover part (41) comprises a thin part (47) formed in an adjacent portion to an outer peripheral surface of the stopper (46).

5. The electronic cymbal (1, 201, 301) as claimed in claim 1, wherein a gap is formed between the overhang part (21c) and the contact part (48).

6. The electronic cymbal (1, 201, 301) as claimed in claim 1 or 5, wherein a gap is formed between the stopper (46) and the sensor installation part (21d).

7. The electronic cymbal (1, 201, 301) as claimed in claim 1, wherein
the sensor installation part (21d) is located on an outer peripheral side with respect to the covered part (21a) and to which the sensor (5) is installed, and
an interval between the upper surface of the sensor installation part (21d) and the lower surface of the upper cover part (41) is formed to gradually increase toward the outer peripheral side.

8. The electronic cymbal (1, 201, 301) as claimed in claim 7 wherein a gap is formed between the overhang part (21c) and the contact part (48).

9. The electronic cymbal (1, 201, 301) as claimed in claim 7 or 8, wherein a gap is formed between the stopper (46) and the sensor installation part (21d).

10. A striking detection method for an electronic cymbal (1, 201, 301), the electronic cymbal (1, 201, 301) comprising:
a plate-like frame (2);
a sensor (5) installed to an upper surface on an outer edge side of the frame (2); and
a cover (4) covering upper surfaces of the sensor (5) and the frame (2),
wherein the cover (4) comprises:
an upper cover part (41) covering the upper surface of the frame (2) in a state in which a space (S1) is formed between the upper cover part (41) and the sensor (5);
a lateral cover part (42) extending from an outer edge of the upper cover part (41) and covering an outer peripheral surface of the frame (2) in a state in which a space is formed between the lateral cover part (42) and an outer peripheral surface of the frame (2); and
a lower cover part (43), extending from a lower end of the lateral cover part (42) to an inner peripheral side and covering a lower surface of the frame (2),
the frame (2) comprises:
a covered part (21a) covered in a state of being contacted by the upper cover part (41);
a bent part (21b) bent downward from an outer edge of the covered part (21a);
an overhang part (21c) extending from a lower end of the bent part (21b) to an outer peripheral side; and
a sensor installation part (21d) which extends from an upper end part on an outer edge side of the overhang part (21c) to the outer peripheral side and to which the sensor (5) is installed,
the upper cover part (41) or the frame (2) comprises a stopper (46) facing the space (S1) between the upper cover part (41) and the sensor (5),
the upper cover part (41) comprises the stopper (46) protruding toward the frame (2) on an outer peripheral side of the bent part (21b),
the deformation of the upper cover part (41) toward the inner peripheral side is limited through catching between the bent part (21b) and the stopper (46),
the upper cover part (41) comprises a protrusion (45) which protrudes toward the sensor (5) and in which a lower surface is parallel to an upper surface of the sensor installation part (21d),
**characterised in that**
the upper surface of the sensor installation part (21d) tilts downward toward the outer peripheral side at a slope greater than that of an upper surface of the covered part (21a), and
the lower cover part (43) comprises a contact part (48) contacting a lower surface of the sensor installation part (21d) in a manner of filling at least a portion of a step difference formed by the overhang part (21c) and the sensor installation part (21d), and
the striking detection method comprises:
at the time of striking an outer edge of the cover (4), limiting deformation of the upper cover part (41) toward an inner peripheral side by the stopper (46) and detecting striking to the cover (4) by pressing the sensor (5) by the upper cover part (41) deformed with the stopper (46) as a fulcrum.

11. The striking detection method for an electronic cymbal (1, 201, 301) as claimed in claim 10,
wherein
the sensor installation part (21d) is located on an outer peripheral side with respect to the covered part (21a) and to which the sensor (5) is installed, an interval between the upper surface of the sensor installation part (21d) and the lower surface of the upper cover part (41) is formed to gradually increase toward the outer peripheral side, and
the striking detection method further comprises:
at the time of striking the outer edge of the cover (4), suppressing the upper cover part (41) and the lateral cover part (42) from contacting an outer edge of the sensor installation part (21d), and detecting striking to the cover (4) by pressing the sensor (5) by the protrusion (45) displaced together with deformation of the upper cover part (41).

## Patentansprüche

1. Elektronisches Zymbal (1, 201, 301), umfassend:
einen plattenartigen Rahmen (2);
einen Sensor (5), der an einer oberen Fläche an einer äußeren Kantenseite des Rahmens (2) installiert ist; und
eine Abdeckung (4), die obere Flächen des Sensors (5) und des Rahmens (2) abdeckt,
wobei die Abdeckung (4) umfasst:
ein oberes Abdeckteil (41), das die obere Fläche des Rahmens (2) in einem Zustand abdeckt, in dem ein Raum (S1) zwischen dem oberen Abdeckteil (41) und dem Sensor (5) ausgebildet ist;
ein seitliches Abdeckteil (42), das sich von einer Außenkante des oberen Abdeckteils (41) erstreckt und eine Außenumfangsfläche des Rahmens (2) in einem Zustand abdeckt, in dem ein Raum zwischen dem seitlichen Abdeckteil (42) und einer Außenumfangsfläche des Rahmens (2) ausgebildet ist; und
ein unteres Abdeckteil (43), das sich von einem unteren Ende des seitlichen Abdeckteils (42) zu einer inneren Umfangsseite erstreckt und eine untere Fläche des Rahmens (2) abdeckt, wobei
der Rahmen (2) ferner umfasst:
ein abgedecktes Teil (21a), das in einem Zustand abgedeckt ist, in dem es von dem oberen Abdeckteil (41) berührt wird;
ein gebogenes Teil (21b), das von einer Außenkante des abgedeckten Teils (21a) nach unten gebogen ist;
ein überhängendes Teil (21c), das sich von einem unteren Ende des gebogenen Teils (21b) zu einer äußeren Umfangsseite erstreckt; und
ein Sensorinstallationsteil (21d), das sich von einem oberen Endteil an einer äußeren Kantenseite des überhängenden Teils (21c) zu der äußeren Umfangsseite erstreckt und an dem der Sensor (5) installiert ist,
das obere Abdeckteil (41) oder der Rahmen (2) einen Anschlag (46) umfasst, der dem Raum (S1) zwischen dem oberen Abdeckteil (41) und dem Sensor (5) zugewandt ist und die Verformung des oberen Abdeckteils (41) zur inneren Umfangsseite hin begrenzt,
das obere Abdeckteil (41) den Anschlag (46) umfasst, der an einer äußeren Umfangsseite des gebogenen Teils (21b) in Richtung des Rahmens (2) vorsteht,
die Verformung des oberen Abdeckteils (41) in Richtung der inneren Umfangsseite durch Einrasten zwischen dem gebogenen Teil (21b) und dem Anschlag (46) begrenzt wird,
das obere Abdeckteil (41) einen Vorsprung (45) umfasst, der in Richtung des Sensors (5) vorsteht und bei dem eine untere Fläche parallel zu einer oberen Fläche des Sensorinstallationsteils (21d) ist, **gekennzeichnet dadurch, dass**
die obere Fläche des Sensorinstallationsteils (21d) nach unten in Richtung der äußeren Umfangsseite mit einer Neigung geneigt ist, die größer ist als die einer oberen Fläche des abgedeckten Teils (21a), und
das untere Abdeckteil (43) ein Kontaktteil (48) umfasst, das eine untere Fläche des Sensorinstallationsteils (21d) in einer Weise berührt, um mindestens einen Abschnitt einer Stufendifferenz, die durch das überhängende Teil (21c) und das Sensorinstallationsteil (21d) gebildet wird, auszufüllen.

2. Elektronisches Zymbal (1, 201, 301) gemäß Anspruch 1, wobei das obere Abdeckteil (41) an der oberen Fläche des Rahmens (2) an der inneren Umfangsseite des Anschlags (46) gebondet ist.

3. Elektronisches Zymbal (1, 201, 301) gemäß Anspruch 1, wobei das untere Abdeckteil (43) an einer unteren Fläche des Rahmens (2) an der inneren Umfangsseite in Bezug auf den Anschlag (46) gebondet ist und nicht an der unteren Fläche des Rahmens (2) an einer äußeren Umfangsseite in Bezug auf eine Position (P1) des Bondens gebondet ist.

4. Elektronisches Zymbal (1, 201, 301) gemäß Anspruch 1, wobei das obere Abdeckteil (41) ein dünnes Teil (47) umfasst, das in einem angrenzenden Abschnitt an eine äußere Umfangsfläche des Anschlags (46) ausgebildet ist.

5. Elektronisches Zymbal (1, 201, 301) gemäß Anspruch 1, wobei zwischen dem überhängenden Teil (21c) und dem Kontaktteil (48) ein Spalt ausgebildet ist.

6. Elektronisches Zymbal (1, 201, 301) gemäß Anspruch 1 oder 5, wobei zwischen dem Anschlag (46) und dem Sensorinstallationsteil (21d) ein Spalt ausgebildet ist.

7. Elektronisches Zymbal (1, 201, 301) gemäß Anspruch 1, wobei sich der Sensorinstallationsteil (21d) an einer äußeren Umfangsseite in Bezug auf den abgedeckten Teil (21a) befindet und an dem der Sensor (5) installiert ist, und
ein Abstand zwischen der oberen Fläche des Sensorinstallationsteils (21d) und der unteren Fläche des oberen Abdeckteils (41) so ausgebildet ist, dass er sich allmählich in Richtung der äußeren Umfangsseite vergrößert.

8. Elektronisches Zymbal (1, 201, 301) gemäß Anspruch 7, wobei ein Spalt zwischen dem überhängenden Teil (21c) und dem Kontaktteil (48) ausgebildet ist.

9. Elektronisches Zymbal (1, 201, 301) gemäß Anspruch 7 oder 8, wobei ein Spalt zwischen dem Anschlag (46) und dem Sensorinstallationsteil (21d) ausgebildet ist.

10. Schlagdetektionsverfahren für ein elektronisches Zymbal (1, 201, 301), wobei das elektronische Zymbal (1, 201, 301) umfasst:
einen plattenartigen Rahmen (2);
einen Sensor (5), der an einer oberen Fläche an einer äußeren Kantenseite des Rahmens (2) angebracht ist; und
eine Abdeckung (4), die die oberen Flächen des Sensors (5) und des Rahmens (2) abdeckt,
wobei die Abdeckung (4) umfasst:
ein oberes Abdeckteil (41), das die obere Fläche des Rahmens (2) in einem Zustand abdeckt, in dem ein Raum (S1) zwischen dem oberen Abdeckteil (41) und dem Sensor (5) ausgebildet ist;
ein seitliches Abdeckteil (42), das sich von einer Außenkante des oberen Abdeckteils (41) erstreckt und eine äußere Umfangsfläche des Rahmens (2) in einem Zustand abdeckt, in dem ein Raum zwischen dem seitlichen Abdeckteil (42) und einer äußeren Umfangsfläche des Rahmens (2) ausgebildet ist; und
ein unteres Abdeckteil (43), das sich von einem unteren Ende des seitlichen Abdeckteils (42) zu einer inneren Umfangsseite erstreckt und eine untere Fläche des Rahmens (2) abdeckt, wobei der Rahmen (2) umfasst:
ein abgedecktes Teil (21a), das in einem Zustand abgedeckt ist, in dem es von dem oberen Abdeckteil (41) berührt wird;
ein gebogenes Teil (21b), das von einer Außenkante des abgedeckten Teils (21a) nach unten gebogen ist;
ein überhängendes Teil (21c), das sich von einem unteren Ende des gebogenen Teils (21b) zu einer äußeren Umfangsseite erstreckt; und
ein Sensorinstallationsteil (21d), das sich von einem oberen Endteil an einer äußeren Kantenseite des überhängenden Teils (21c) zu der äußeren Umfangsseite erstreckt und an dem der Sensor (5) installiert ist,
das obere Abdeckteil (41) oder der Rahmen (2) einen Anschlag (46) umfasst, der dem Raum (S1) zwischen dem oberen Abdeckteil (41) und dem Sensor (5) zugewandt ist,
das obere Abdeckteil (41) den Anschlag (46) umfasst, der in Richtung des Rahmens (2) an einer äußeren Umfangsseite des gebogenen Teils (21b) vorsteht,
die Verformung des oberen Abdeckteils (41) in Richtung der inneren Umfangsseite durch Einrasten zwischen dem gebogenen Teil (21b) und dem Anschlag (46) begrenzt wird,
das obere Abdeckteil (41) einen Vorsprung (45) umfasst, der in Richtung des Sensors (5) vorsteht und bei dem eine untere Fläche parallel zu einer oberen Fläche des Sensorinstallationsteils (21d) ist, **dadurch gekennzeichnet, dass**
die obere Fläche des Sensorinstallationsteils (21d) in Richtung der äußeren Umfangsseite mit einer Neigung nach unten geneigt ist, die größer ist als die einer oberen Fläche des abgedeckten Teils (21a), und
das untere Abdeckteil (43) ein Kontaktteil (48) umfasst, das eine untere Fläche des Sensorinstallationsteils (21d) in einer Weise berührt, um mindestens einen Abschnitt einer Stufendifferenz, die durch das überhängende Teil (21c) und das Sensorinstallationsteil (21d) gebildet wird, auszufüllen, und
wobei das Schlagdetektionsverfahren umfasst:
Begrenzen von Verformung des oberen Abdeckteils (41) in Richtung einer inneren Umfangsseite durch den Anschlag (46) zum Zeitpunkt des Schlagens einer Außenkante der Abdeckung (4), und Detektieren des Schlags auf die Abdeckung (4) durch Drücken des Sensors (5) durch den oberen Abdeckteil (41), der mit dem Anschlag (46) als Drehpunkt verformt wird.

11. Schlagdetektionsverfahren für ein elektronisches Zymbal (1, 201, 301) gemäß Anspruch 10, wobei
das Sensorinstallationsteil (21d) sich an einer äußeren Umfangsseite in Bezug auf den abgedeckten Teil (21a) befindet und an dem der Sensor (5) installiert ist,
ein Abstand zwischen der oberen Fläche des Sensorinstallationsteils (21d) und der unteren Fläche des oberen Abdeckteils (41) so ausgebildet ist, dass er sich allmählich in Richtung der äußeren Umfangsseite vergrößert, und
das Schlagdetektionsverfahren ferner umfasst:
Unterdrücken, dass der obere Abdeckteil (41) und der seitliche Abdeckteil (42) zum Zeitpunkt des Schlagens auf die Außenkante der Abdeckung (4), eine Außenkante des Sensorinstallationsteils (21d) berühren, und Detektieren eines Schlags auf die Abdeckung (4) durch Drücken des Sensors (5) durch den Vorsprung (45), der zusammen mit einer Verformung des oberen Abdeckteils (41) verschoben wird.

## Revendications

1. Cymbale électronique (1, 201, 301), comprenant :
un cadre en forme de plaque (2) ;
un capteur (5) installé sur une surface supérieure sur un côté périphérique extérieur du cadre (2) ; et
un couvercle (4) recouvrant les surfaces supérieures du capteur (5) et du cadre (2),
le couvercle (4) comprenant :
une partie supérieure de couvercle (41) recouvrant la surface supérieure du cadre (2) dans un état dans lequel un espace (S1) est formé entre la partie supérieure de couvercle (41) et le capteur (5) ;
une partie latérale de couvercle (42) s'étendant à partir d'un bord extérieur de la partie supérieure de couvercle (41) et recouvrant une surface périphérique extérieure du cadre (2) dans un état dans lequel un espace est formé entre la partie latérale de couvercle (42) et une surface périphérique extérieure du cadre (2) ; et
une partie inférieure de couvercle (43) s'étendant d'une extrémité inférieure de la partie latérale de couvercle (42) à un côté périphérique intérieur et recouvrant une surface inférieure du cadre (2),
le cadre (2) comprenant en outre :
une partie recouverte (21a) recouverte dans un état de contact avec la partie supérieure de couvercle (41) ;
une partie courbée (21b) courbée vers le bas à partir d'un bord extérieur de la partie recouverte (21a) ;
une partie en porte-à-faux (21c) s'étendant d'une extrémité inférieure de la partie courbée (21b) à un côté périphérique extérieur ; et
une partie d'installation de capteur (21d) qui s'étend d'une partie d'extrémité supérieure sur un côté périphérique extérieur de la partie en porte-à-faux (21c) jusqu'au côté périphérique extérieur et sur laquelle le capteur (5) est installé,
la partie supérieure de couvercle (41) ou le cadre (2) comprenant une butée (46) faisant face à l'espace (S1) entre la partie supérieure de couvercle (41) et le capteur (5) et limitant la déformation de la partie supérieure de couvercle (41) vers le côté périphérique intérieur,
la partie supérieure de couvercle (41) comprenant la butée (46) faisant saillie vers le cadre (2) sur un côté périphérique extérieur de la partie courbée (21b),
la déformation de la partie supérieure de couvercle (41) vers le côté périphérique intérieur étant limitée par un accrochage entre la partie courbée (21b) et la butée (46),
la partie supérieure de couvercle (41) comprenant une saillie (45) qui fait saillie vers le capteur (5) et dans laquelle une surface inférieure est parallèle à une surface supérieure de la partie d'installation de capteur (21d),
**caractérisée en ce que**
la surface supérieure de la partie d'installation de capteur (21d) s'incline vers le bas en direction du côté périphérique extérieur selon une pente supérieure à celle d'une surface supérieure de la partie recouverte (21a), et
la partie inférieure de couvercle (43) comprend une partie de contact (48) en contact avec une surface inférieure de la partie d'installation de capteur (21d) de manière à remplir au moins une partie d'une différence de gradin formé par la partie en porte-à-faux (21c) et la partie d'installation de capteur (21d).

2. Cymbale électronique (1, 201, 301) selon la revendication 1, dans laquelle la partie supérieure de couvercle (41) est liée à la surface supérieure du cadre (2) sur le côté périphérique intérieur de la butée (46).

3. Cymbale électronique (1, 201, 301) selon la revendication 1, dans laquelle la partie inférieure de couvercle (43) est liée à une surface inférieure du cadre (2) sur le côté périphérique intérieur par rapport à la butée (46), et n'est pas liée à la surface inférieure du cadre (2) sur un côté périphérique extérieur par rapport à une position (P1) du raccordement.

4. Cymbale électronique (1, 201, 301) selon la revendication 1, dans laquelle la partie supérieure de couvercle (41) comprend une partie mince (47) formée dans une partie adjacente à une surface périphérique extérieure de la butée (46).

5. Cymbale électronique (1, 201, 301) selon la revendication 1, dans laquelle un espace est formé entre la partie en porte-à-faux (21c) et la partie de contact (48).

6. Cymbale électronique (1, 201, 301) selon la revendication 1 ou 5, dans laquelle un espace est formé entre la butée (46) et la partie d'installation de capteur (21d).

7. Cymbale électronique (1, 201, 301) selon la revendication 1, dans laquelle la partie d'installation de capteur (21d) est située sur un côté périphérique extérieur par rapport à la partie recouverte (21a) et sur lequel le capteur (5) est installé,
un intervalle entre la surface supérieure de la partie d'installation de capteur (21d) et la surface inférieure de la partie supérieure de couvercle (41) étant formé de manière à augmenter graduellement vers le côté périphérique extérieur.

8. Cymbale électronique (1, 201, 301) selon la revendication 7, dans laquelle un intervalle est formé entre la partie en porte-à-faux (21c) et la partie de contact (48).

9. Cymbale électronique (1, 201, 301) selon la revendication 7, dans laquelle un intervalle est formé entre la butée (46) et la partie d'installation de capteur (21d).

10. Procédé de détection de frappe pour une cymbale électronique (1, 201, 301), la cymbale électronique (1, 201, 301) comprenant :
un cadre en forme de plaque (2) ;
un capteur (5) installé sur une surface supérieure sur un côté périphérique extérieur du cadre (2) ; et
un couvercle (4) recouvrant les surfaces supérieures du capteur (5) et du cadre (2),
le couvercle (4) comprenant :
une partie supérieure de couvercle (41) recouvrant la surface supérieure du cadre (2) dans un état dans lequel un espace (S1) est formé entre la partie supérieure de couvercle (41) et le capteur (5) ;
une partie latérale de couvercle (42) s'étendant à partir d'un bord extérieur de la partie supérieure de couvercle (41) et recouvrant une surface périphérique extérieure du cadre (2) dans un état dans lequel un espace est formé entre la partie latérale de couvercle (42) et une surface périphérique extérieure du cadre (2) ; et
une partie inférieure de couvercle (43), s'étendant d'une extrémité inférieure de la partie latérale de couvercle (42) à un côté périphérique intérieur et recouvrant une surface inférieure du cadre (2),
le cadre (2) comprenant :
une partie recouverte (21a) recouverte dans un état de contact avec la partie supérieure de couvercle (41) ;
une partie courbée (21b) courbée vers le bas à partir d'un bord extérieur de la partie recouverte (21a) ;
une partie en porte-à-faux (21c) s'étendant à partir d'une extrémité inférieure de la partie courbée (21b) vers un côté périphérique extérieur ; et
une partie d'installation de capteur (21d) qui s'étend d'une partie d'extrémité supérieure sur un côté périphérique extérieur de la partie en porte-à-faux (21c) au côté périphérique extérieur et sur laquelle le capteur (5) est installé.
la partie supérieure de couvercle (41) ou le cadre (2) comportant une butée (46) faisant face à l'espace (S1) entre la partie supérieure de couvercle (41) et le capteur (5),
la partie supérieure de couvercle (41) comprenant la butée (46) faisant saillie vers le cadre (2) sur un côté périphérique extérieur de la partie courbée (21b), la déformation de la partie supérieure de couvercle (41) vers le côté périphérique intérieur étant limitée par un accrochage entre la partie courbée (21b) et la butée (46),
la partie supérieure de couvercle (41) comprenant une saillie (45) qui fait saillie vers le capteur (5) et dans laquelle une surface inférieure est parallèle à une surface supérieure de la partie d'installation de capteur (21d),
**caractérisée en ce que**
la surface supérieure de la partie d'installation de capteur (21d) s'incline vers le bas en direction du côté périphérique extérieur selon une pente supérieure à celle d'une surface supérieure de la partie recouverte (21a), et
la partie inférieure de couvercle (43) comprend une partie de contact (48) en contact avec une surface inférieure de la partie d'installation de capteur (21d) de manière à remplir au moins une partie d'une différence de gradin formée par la partie en porte-à-faux (21c) et la partie d'installation de capteur (21d), et
le procédé de détection de frappe comprenant :
au moment de la frappe d'un bord extérieur du couvercle (4), la limitation de la déformation de la partie supérieure de couvercle (41) vers un côté périphérique intérieur par la butée (46) et la détection de la frappe sur le couvercle (4) en appuyant sur le capteur (5) par la partie supérieure de couvercle (41) déformée avec la butée (46) comme point d'appui.

11. Procédé de détection de frappe pour une cymbale électronique (1, 201, 301) selon la revendication 10,
dans lequel la partie d'installation de capteur (21d) est située sur un côté périphérique extérieur par rapport à la partie recouverte (21a) et sur lequel le capteur (5) est installé,
un intervalle entre la surface supérieure de la partie d'installation de capteur (21d) et la surface inférieure de la partie supérieure de couvercle (41) est formé de manière à augmenter progressivement vers le côté périphérique extérieur, et le procédé de détection de frappe comprend en outre :
au moment de la frappe du bord extérieur du couvercle (4), le fait d'empêcher la partie supérieure du couvercle (41) et la partie latérale de couvercle (42) d'entrer en contact avec un bord extérieur de la partie d'installation de capteur (21d), et la détection de la frappe sur le couvercle (4) en appuyant sur le capteur (5) par la saillie (45) déplacée conjointement avec la déformation de la partie supérieure de couvercle (41) .
